# EUROPEAN PATENT APPLICATION

(11) **EP 1 081 902 A2**
(43) Date of publication of application: **07.03.2001**
(21) Application number: 00115990.4
(22) Date of filing: 26.07.2000
(51) Int. Cl.: H04L 12/66, H04M 7/00

(54) **Improvements in or relating to data transmission**

(30) Priority: 04.09.1999 GB 9920832
(71) Applicant: SIEMENS PLC, Bracknell, Berkshire RG12 8FZ (GB)
(72) Inventor: Boot, Gordon Philip, Cotgrave, Nottingham NG2 3JF (GB); McNeillie, Duncan John, Loughborough, Leicestershire LE12 8BP (GB)
(74) Representative: Mackett, Margaret

(57) **Abstract**

A telephony system is described in which reduction in audio quality is avoided through decompression and recompression. This is achieved by having a gateway which does not decompress G.711 encoding, but enables G.723.1 encoding to be also transmitted. As G.723.1 encoding occupies less than an eighth of the bandwidth of G.711 encoding, a signal (400, 418, 428, 438) which is encoded for G.723.1 can be transmitted simultaneously with a signal (300, 310, 320, 330, 340) which is encoded for G.711 by replacing the least significant bit (318, 328, 338) of each G.711 octet (310, 320, 330) with bits (418, 428, 438) of the G.723.1 signal (400).

## Description

The present invention relates to improvements in or relating to data transmission, and is more particularly, although not exclusively, concerned with the transmission of data using telephony.

It is well known that a data transmission rate of 64kbit/s can be used for both standard telephony and interworking PC telephony. The transmission rate of 64kbit/s corresponds to a standard encoding, G.711. PC to PC transmission can also have a data transmission rate of 64kbit/s. However, in order to save on local area network (LAN) bandwidth, compression techniques are normally used to reduce the data transmission rate for PC to PC communication from 64kbit/s to rates such as 6.3kbit/s. A transmission rate of 6.3kbit/s may be achieved with a standard encoding, G.723.1.

However, the use of the G.723.1 encoding is not acceptable for data transmission using standard telephony, that is, voice transmission. This is because the quality of the voice transmission may be severely impaired due to losses introduced when the data stream corresponding to the voice transmission is decompressed and recompressed. It will be appreciated that such a data stream may be decompressed and recompressed several times between its point of origin and its end destination depending on the routing of the data stream between the two points.

It is therefore an object of the present invention to provide a method for data transmission which overcomes the disadvantages described above. In particular, it is an object to improved quality for transmitted data streams which are decompressed and recompressed as well as for data streams which are not.

In accordance with one aspect of the present invention, there is provided a method of simultaneously transmitting a first data stream having a first encoding and a second data stream having a second encoding, the first encoding having a bit rate which is greater than the bit rate for the second encoding, the method being characterised by removing at least the least significant bit of the first data stream and replacing it with the second data stream.

For a better understanding of the present invention, reference will now be made, by way of example only, to the accompanying drawings in which:-
Figure 1 is a block diagram illustrating a basic use of the present invention;
Figure 2 illustrates a particular use of the present invention in relation to a voice over internet protocol (VOIP) network;
Figure 3 is similar to Figure 2 but with a single PABX unit;
Figure 4 schematically illustrates data streams encoded for G.711 in accordance with the present invention;
Figure 5 is a block diagram of a gateway which implements the encoding illustrated in Figure 4; and
Figure 6 is a block diagram of a practical application of the present invention.

The present invention relates to a method for combining two data streams into a single data path, and will be described with reference to data streams comprising audio streams. It will however be appreciated that the present invention is not only limited to audio streams.

Although the present invention will be described with reference to G.723.1 and G.711 encodings, any suitable encodings can be utilised.

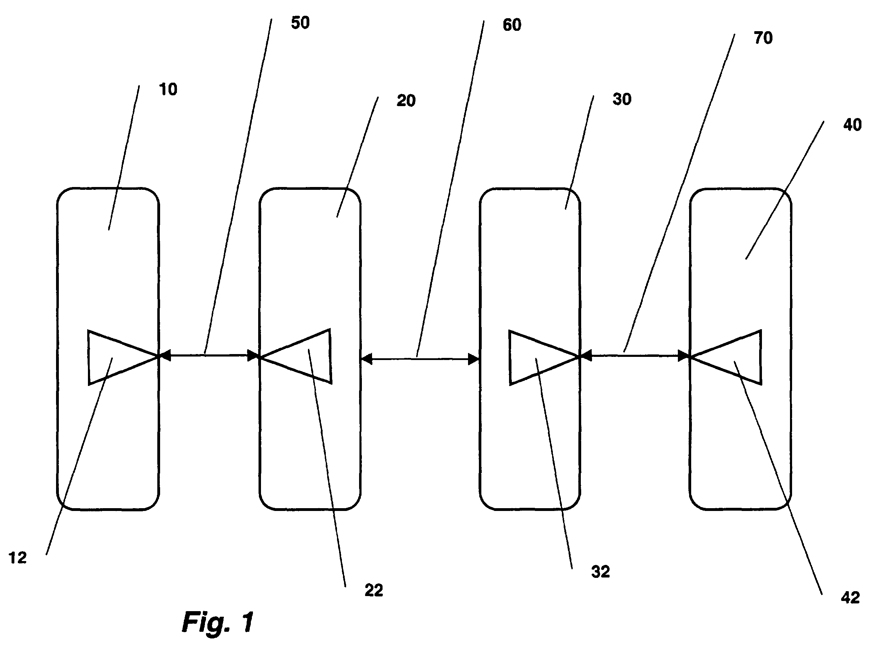

Figure 1 illustrates four sites 10, 20, 30, 40 which are connected together in a line by digital trunk lines 50, 60, 70. Each site 10, 20, 30, 40 includes a processor unit which has a compression/decompression unit 12, 22, 32, 42 as shown.

A call originating at site 10 comprising a compressed data stream in accordance with the G.723.1 encoding described above, that is, having a transmission rate of 6.3kbits/s, is to be transmitted to site 40 via sites 20 and 30. The compressed data stream is transmitted from site 10 to site 20 via digital trunk line 50.

When the call is set up, site 20 and its associated compression/decompression unit 22 does not know if there is any other compression/decompression equipment in the call path. To cover all options, when the compressed data stream from site 10 is received at site 20, it is decompressed in accordance with the G.711 encoding, and combined with the original compressed data stream to form a combined data stream in accordance with the present invention. The method in which the two data streams are combined is described in detail later.

The call, which originated as a compressed data stream at site 10, now comprises a combined data stream comprising both G.711 encoding (transmission rate of 64kbits/s) and G.723.1 encoding (transmission rate of 6.3kbits/s), at site 20.

It is to be noted that sites 10 and 20 operate as a pair, that is, site 20 knows whether or not the data stream transmitted from site 10 is a compressed or uncompressed data stream. Similarly, sites 30 and 40 operate as a pair with site 30 knowing whether site 40 will accept compressed or uncompressed data stream.

When site 30 receives the combined data stream from site 20, it can detect the presence of compression within the data stream and transmits the already compressed portion of the combined data stream to site 40. As described previously, sites 30 and 40 operate as a pair and site 30 knows whether site 40 can receive compressed or uncompressed data. It will readily be appreciated that this has the same effect as removing the decompression/recompression units 22, 32 at sites 20, 30.

If the processor at site 20 fails to detect the presence of an embedded compressed data stream in a data stream returned from site 30 after a predetermined time, it will discontinue sending the combined data stream and will only send the uncompressed data stream. Similarly, if an uncompressed data stream is returned to site 20 from site 30, site 20 will only send the compressed data stream. Site 20 continues to monitor the returned data stream in case a site further along the chain transfers the call to a compressed or uncompressed leg and adjustments to the data stream to be transmitted is required. For example, if the called party at site 40 transfers the call to a route without compression, the processor at site 20 will no longer receive the compressed data stream from site 40 and will activate its compression/decompression unit 22 to effectively send only the uncompressed data stream.

It will be appreciated that in the described scenario above, the compressed stream is transferred between sites 10 and 20 and sites 30 and 40 with the combined data stream comprising both compressed and uncompressed data streams being transferred between sites 20 and 30, the data stream only being compressed once between its origin and its destination.

In this particular example, the data stream from site 10 is compressed, but may also be an uncompressed data stream depending on the transmitting device at site 10 and the link between site 10 and its paired site 20.

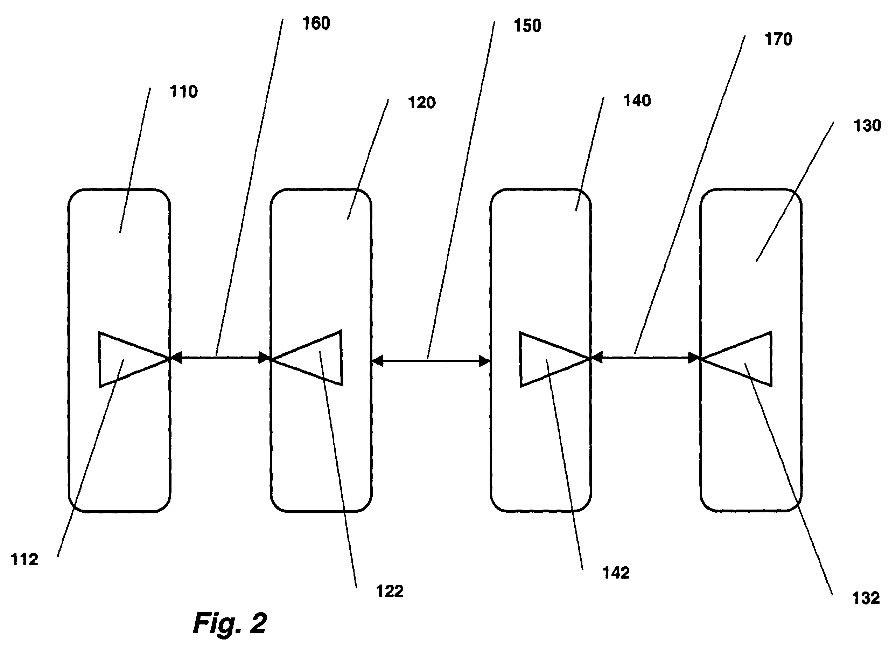

Figure 2 illustrates an application of the present invention to a voice over internet protocol (VOIP) network. The network comprises a first PC 110 connected to a first PABX unit 120 and a second PC 130 connected to a second PABX unit 140, the first and second PABX units 120, 140 being connected together by means of a digital trunk line 150. The connection between PC 110 and PABX unit 120 comprises a local area network (LAN) 160. Similarly, the connection between PC 130 and PABX unit 140 comprises a LAN 170. Each PC 110, 130 and each PABX unit 120, 140 includes a processor (not shown) having a compression/decompression unit 112, 122, 132, 142 as before.

The VOIP network of Figure 2 operates in the same way as Figure 1, that is, a data stream from PC 110 destined for PC 130 comprises a compressed data stream and is transmitted to PABX unit 120 where it is decompressed and the combined data stream is formed for transmission to PABX unit 140. As before, PC 110 and PABX unit 120 and PC 130 and PABX unit 140 operate as respective pairs. In this case, PC 130 and PABX unit 140 operate to transmit and receive compressed data streams and therefore PABX unit 140 detects the compressed data stream in the combined data stream and transmits only the compressed data stream to PC 130. Again, it will be noted that the data stream is only compressed once.

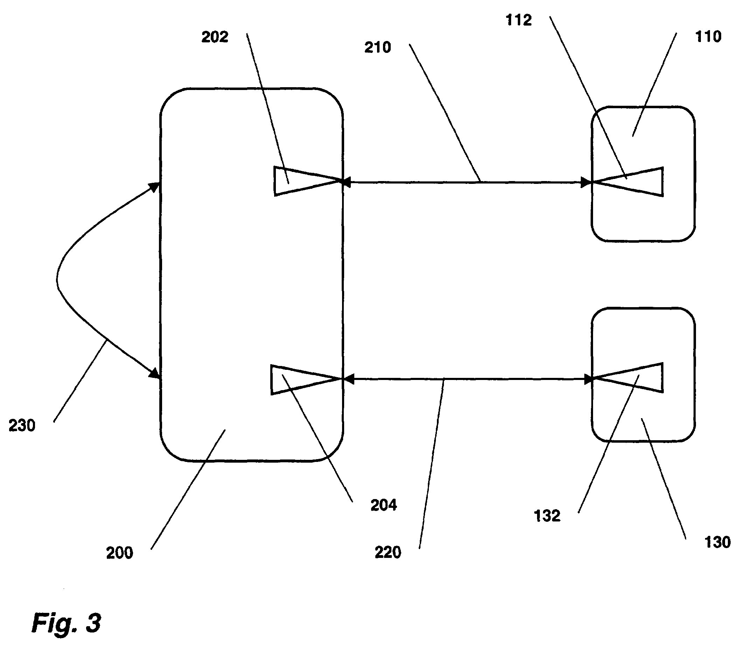

Figure 3 is similar to Figure 2 but the two PABX units 120, 140 are replaced with a single PABX unit 200 having two compression/decompression units 202, 204 as shown. Components in Figure 3 which have previously been described bear the same reference numerals. As before, two PCs 110, 130 are to be connected to transmit to one another. In this case, PC 110 is connected to PABX unit 200 via a LAN 210. Similarly, PC 130 is connected to PABX unit 200 by LAN 220. LANs 210, 220 transmit compressed data streams in the same way as LANs 160, 170 of Figure 2. However, this time digital trunk link 150 which transmits a combined data stream is replaced by an internal link 230 in PABX unit 200.

In Figure 2, each PC 110, 130 and PABX unit 120, 140 operate in pairs as described above. However, in Figure 3, the pairing is formed between each PC 110, 130 and its associated compression/decompression unit 202, 204 in PABX unit 200. The operation of the arrangement in Figure 3 is the same as that of the arrangement in Figure 2, and there is only a single compression of the compressed data stream.

In accordance with the present invention, it will be appreciated that the data stream is only compressed and decompressed once thereby preserving the quality of the transmission. This is the case regardless of the number of links or hops it needs to pass through.

There is also a saving in processor power as compression is a very intensive processor operation, and by compressing the data stream only at its ends releases the processing resources of intervening stages. It is to be noted that compression to the G.723.1 encoding is particularly processor intensive, but this may not be the case with other encodings. For example, the relative processor resource to compress is about 20 MIPS, 2 MIPS to decompress, and <<1MIP for each of multiplexing two data streams, detecting the presence of a multiplexed data stream and synchronising the compressed frame alignment.

It will readily be appreciated that as the G.723.1 encoding occupies less than an eighth of the bandwidth of the G.711 encoding, it is possible to transmit both G.723.1 and G.711 encodings across a narrowband network by stealing the least significant bit of each G.711 octet for the G.723.1 encoding. This has a negligible effect on audio quality when deriving audio from the G.711 encoding whilst having the advantage that the G.723.1 encoding is available to a destination local area network which uses the G.723.1 encoding without having to decompress and recompress the G.711 encoded data stream. This avoids reduction in audio quality through decompression and recompression.

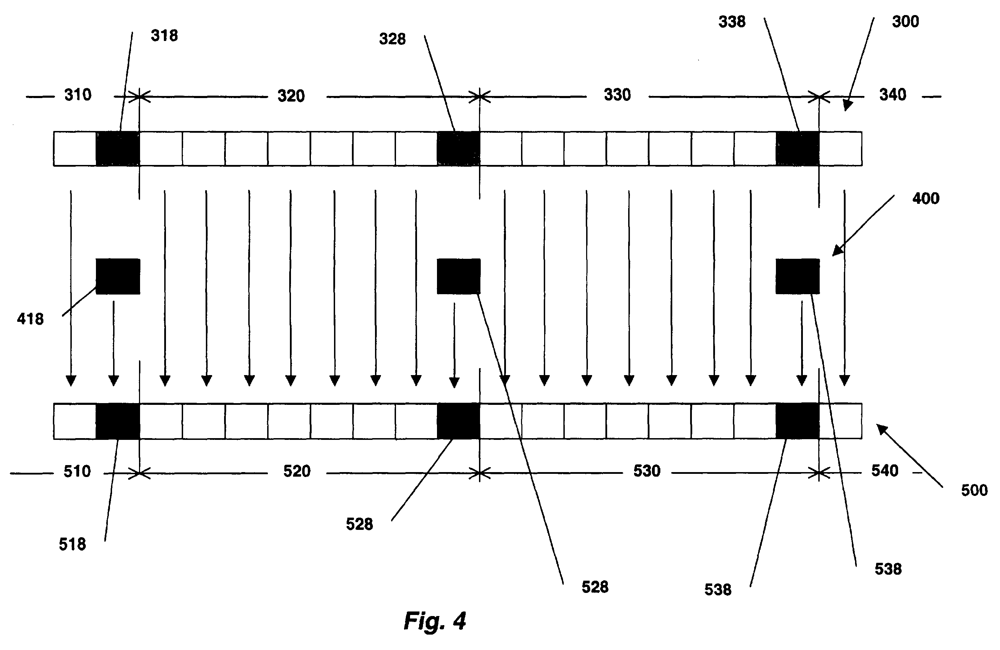

Turning now to the method for combining the two data streams. This is illustrated and described with reference to Figure 4. In accordance with the present invention, the combined or multiplexed data stream is achieved by transmitting both encodings simultaneously across links 60 (Figure 1), 150 (Figure 2), 230 (Figure 3) by utilising the least significant bit of each G.711 octet for the G.723.1 standard.

In Figure 4, a part of a transmission signal 300 in the G.711 encoding having a transmission rate of 64kbit/s, is graphically illustrated by octets 320, 330 and partial octets 310, 340. The least significant bit 318, 328, 338 of respective octets 310, 320, 330 are also shown. A transmission signal 400 in the G.723.1 encoding having a transmission rate of 6.3kbit/s, is illustrated by bits 418, 428, 438. These bits 418, 428, 438 replace respective bits 318, 328, 338 in octets 310, 320, 330 to form new transmission signal 500 comprising octets 510, 520, 530 in the G.711 encoding where the least significant bits, 518, 528, 538, are in the G.723.1 encoding. In this way, two data streams having two different encodings can be transmitted concurrently.

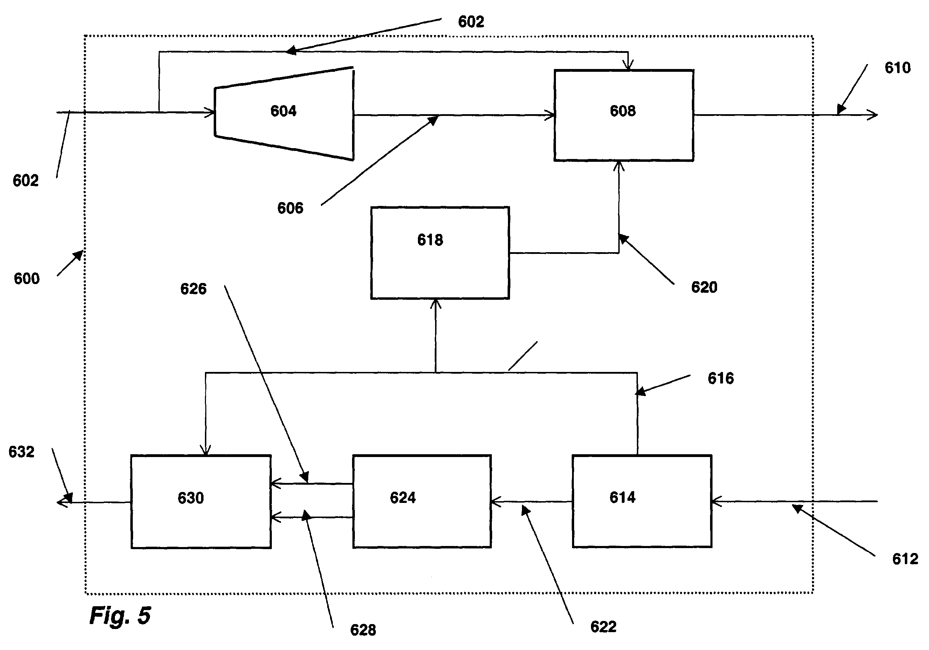

To support the concurrent transmission of two data streams, a gateway in each of the compression/decompression units described above, needs to be capable of determining the data stream which is to be sent between users. An embodiment of such a gateway is shown in Figure 5.

In Figure 5, a gateway 600 located, for example, in the compression/decompression unit 22 at site 20 (Figure 1), in the compression/decompression unit 122 of PABX unit 120 (Figure 2), or in the compression/decompression unit 202 in PABX unit 200 (Figure 3), is shown for receiving an input signal 602 from a user (not shown). The input signal 602 may origin ate at site 10 (Figure 1) or from PC 110 (Figures 2 and 3) and comprises a compressed data stream having a transmission rate of 6.3kbit/s. Signal 602 is passed to a decompression circuit 604 where it is decompressed to form a decompressed signal 606 having a transmission rate of 64kbit/s. Decompressed signal 606 is passed to a multiplexer 608 where it is combined with input signal 602 to provide a new 64kbit/s multiplexed signal 610 comprising both a decompressed or uncompressed data stream and a compressed data stream, the latter being carried in the former as the least significant bit as described above with reference to Figure 4 above. The multiplexed signal 610 comprises an output signal from the gateway 600 for another hop of the transmission, for example, for site 40 via site 30 (Figure 1), for PC 130 via PABX unit 140 (Figure 2), or for PC 130 via PABX unit 200 (Figure 3).

The gateway 600 also receives an input or feedback signal 612 from its destination, for example, from site 30 where sites 30 and 40 operate as a pair (Figure 1), from PABX unit 140 which operates as a pair with PC 130 (Figure 2), or from PABX unit 200 which operates as a pair with PC 130 (Figure 3). Feedback signal 612 is passed to a detector block 614 where it is determined whether it comprises a combined data stream or only a compressed data stream or an uncompressed data stream, that is, whether the feedback signal 612 is multiplexed or not. An output signal 616 from the detector block 614 indicates whether the feedback signal 612 is multiplexed or not and is passed to a decision block 618. Decision block 618 provides a decision signal 620 for the multiplexer 608 to select either a compressed signal or a multiplexed signal for further transmission as output signal 610. The decision block 618 therefore controls the output signal 610 in accordance with the feedback signal 612.

The detector block 614 provides an output signal 622 which is passed to a de-multiplexer circuit 624 where it is separated into a decompressed or uncompressed component 626 and a compressed component 628. Both signal components 626, 628 are then passed to a selector block 630 which selects one of the signal components 626, 628 to be the output signal 632 from the gateway 600 and hence the input signal for the user (not shown). Second selector block 630 is also controlled by detector block 614 via output signal 616 as shown.

The gateway 600 therefore forms and provides a multiplexed signal from a compressed signal for forwarding to a final destination or to a next destination in the chain to the final destination. The gateway 600 also determines whether the next destination requires the uncompressed data stream by receiving a feedback signal therefrom, and using that signal to control the data stream supplied thereto. For example, when G.723.1 encoding is required to be provided, detector circuit 614 monitors the least significant bits of each G.711 octet to determine if the G.723.1 encoding is present.

When receiving audio signals from a narrow band network and needing to provide G.723.1 encoding on the LAN side, digital signal processing devices monitor the 8kbit/s data stream comprising the least significant bits of each G.711 octet to determine if G.723.1 encoding is present. However, integrity checks on the data stream will fail if the G.711 encoding comes from a narrow band source or a VOIP gateway which is not using G.723.1 encoding on its LAN side or if an analogue section exists within the narrow band network. In any of these cases, the received G.711 encoded data stream is used instead and is compressed to give G.723.1 encoding on the LAN side. The integrity of the 8kbit/s data stream is constantly checked during the lifetime of the connection in case of changes in the narrow band network due to transfer, conference, intrusion, etc.

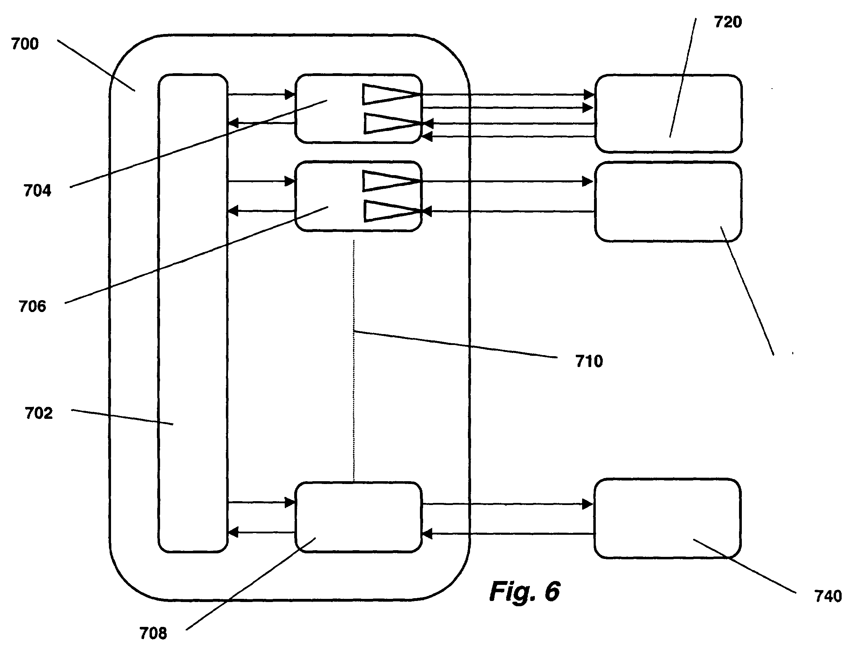

A particular application of the present invention is described with reference to Figure 6. In Figure 6, a multi-coded conferencing bridge 700 comprises a standard conferencing bridge 702 to which a plurality of interface units 704, 706, 708 are connected. In this embodiment, interface units 704, 706 each include a gateway 600 as described in Figure 5. Connected to the bridge 700 are three users 720, 730, 740, each user being connected to a respective one of the interface units 704, 706, 708 as shown. Although only three users 720, 730, 740 and associated interface units 704, 706, 708 are shown, it will readily be appreciated that more than three users can be connected to the bridge 702. In the described embodiment, the bridge 702 has capacity for eight lines, that is, eight users may be connected, as indicated by the dotted line 710. As described previously with reference to Figures 1 to 3, each of interface units 704, 706, 708 forms a pair with its associated user 720, 730, 740.

If two users are using compression, and they are joined by a third user, then the bridge 700 is required, regardless of whether the third user has a compression capability or not. This is to prevent all the users being reduced to the capability of the least. By utilising the method of the present invention described above, this reduction can be avoided and multi-mode working can be supported.

In the described embodiment, user 720 uses a combined data stream comprising both a compressed data stream and an uncompressed or decompressed data stream, user 730 uses a compressed data stream only, and user 740 has no compression capability. This means that gateways as described with reference to Figure 5 are only present in interface units 704 and 706.

In the illustrated embodiment, users 720 and 730 each have compression capability and use compressed data streams, and user 740 uses only uncompressed data streams. When user 720, for example, needs to transmit to user 740, it may not be known that the user 740 does not have compression capability, the interface unit 704 associated with user 720 receives the compressed data stream, decompresses it, multiplexes the decompressed data stream with the original compressed signal as described with reference to gateway 600 (Figure 5), and transmits the combined data stream to the bridge 702. Bridge 702 then initially transmits the combined data stream to the interface unit 708, but receives a feedback signal which indicates that no compressed data stream is present. As described above with reference to Figure 5, the gateway in interface unit 704 switches to transmit only decompressed data to interface unit 708 for subsequent transmission to user 740.

It will be appreciated that the present invention has particular application to a Realitis Xpress telephony system where quality of transmission is maintained as there is no requirement for decompression and recompression. Realitis and Realitis Xpress are trademarks of Siemens PLC.

Although the present invention has been described with reference to a combined data stream comprising compressed and decompressed or uncompressed versions of the same data stream, it will be apparent that the invention is not limited to such an application. The invention may be used in any application where it is necessary to transmit simultaneously two different encoded data streams which may or may not be compressed.

## Claims

1. A method of simultaneously transmitting a first data stream having a first encoding and a second data stream having a second encoding, the first encoding having a bit rate which is greater than the bit rate for the second encoding, the method being characterised by removing at least the least significant bit of the first data stream and replacing it with the second data stream.

2. A method according to claim 1, wherein the first data stream comprises an eight-bit stream.

3. A method according to claim 2, wherein the second data stream comprises a single-bit stream.

4. A method according to claim 3, wherein the least significant bit of the eight-bit stream is replaced with the single-bit stream.

5. A method according to claim 4, wherein the first encoding comprises G.711 encoding.

6. A method according to claim 5, wherein the second encoding comprises G.723.1 encoding.

7. A method substantially as hereinbefore described with reference to the accompanying drawings.
